# EUROPEAN PATENT APPLICATION

(11) **EP 1 533 030 A1**
(43) Date of publication of application: **25.05.2005**
(21) Application number: 03741161.8
(22) Date of filing: 03.07.2003
(51) Int. Cl.: B01J 23/89, B01J 23/63, B01D 53/94

(54) **CATALYST FOR EXHAUST GAS PURIFICATION**

(30) Priority: 09.07.2002 JP 2002200591
(71) Applicant: Daihatsu Motor Co., Ltd., Ikeda-shi, Osaka 563-8651 (JP)
(72) Inventor: TANAKA, Hirohisa c/o SHIGA TECHNICAL CENTER, Ryuo-cho Gamo-gun Shiga 520-2593 (JP); TAN, Isao c/o SHIGA TECHNICAL CENTER, Ryuo-cho Gamo-gun Shiga 520-2593 (JP); UENISHI, Mari c/o SHIGA TECHNICAL CENTER, Ryuo-cho Gamo-gun Shiga 520-2593 (JP); KAJITA, Nobuhiko c/o SHIGA TECHNICAL CENTER, Ryuo-cho Gamo-gun Shiga 520-2593 (JP); TANIGUCHI, Masashi c/o SHIGA TECHNICAL CENTER, Ryuo-cho Gamo-gun2Shiga 520-2593 (JP)
(74) Representative: Teipel, Susanne, Dr.
(86) International application number: PCT/JP2003/008436
(87) International publication number: WO 2004/004896

(57) **Abstract**

To provide an exhaust gas purifying catalyst which can maintain the catalytic activity of Rh at a high level over a long time and can achieve satisfactory emission control performance, an exhaust gas purifying catalyst is prepared so as to contain a composite oxide having a perovskite structure represented by the general formula (1):

ABRhO₃ (1)

wherein A represents at least one element selected from rare-earth elements essentially including one or more rare-earth elements each having a valence of 3 as the only valence and arbitrarily including Ce and/or Pr; and B represents at least one element selected from transition elements excluding Co, Rh and the rare-earth elements, and Al.

## Description

### Technical Field

The present invention relates to an exhaust gas purifying catalyst which efficiently purifies carbon monoxide (CO), hydrocarbons (HC), and nitrogen oxides (NOx) contained in emissions (exhaust gases) typically from automobile engines.

### Background Art

Noble metals such as Pt (platinum), Rh (rhodium), and Pd (palladium) have been widely used as catalytic components of three-way catalysts which can simultaneously clean up carbon monoxide (CO), hydrocarbons (HC), and nitrogen oxides (NOx) contained in emissions.

Among these noble metals, Rh satisfactorily reduces NOx. For improving the thermostability, Rh is supported by a composite oxide, for example, having a perovskite structure represented by a general formula: ABO₃ by impregnation. In addition, by incorporating Rh into a composite oxide as its constitutional component, the thermostability can further be improved and emission control performance can be increased than in the case where Rh is supported by such a composite oxide.

Proposed examples of such composite oxides each having a perovskite structure and containing Rh as a constituent are La_{0.8}Ba_{0.2}Ni_{0.48}Co_{0.50}Rh_{0.02}O₃ (Japanese Laid-open (Unexamined) Patent Publication No. Hei 8-217461) and La_{0.4}Sr_{0.6}Co_{0.95}Rh_{0.05}O₃ (Japanese Laid-open (Unexamined) Patent Publication No. Hei 5-76762).

When the above-mentioned composite oxide comprises elements each having a valence of 2, such as Sr (strontium) or Ba (barium) on the A site and Co (cobalt) on the B site of the perovskite structure represented by the general formula: ABO₃, Rh becomes unstable in the perovskite structure under oxidative-reducing atmospheres, its grains grow after long-term use and the resulting catalyst may exhibit remarkably reduced catalytic activity.

### Disclosure of Invention

Accordingly, an object of the present invention is to provide an exhaust gas purifying catalyst which can maintain the catalytic activity of Rh at a high level over a long time and can achieve satisfactory emission control performance.

The present invention provides an exhaust gas purifying catalyst comprising a composite oxide having a perovskite structure represented by the general formula (1) :

ABRhO₃ (1)

wherein A represents at least one element selected from rare-earth elements essentially including one or more rare-earth elements each having a valence of 3 as the only valence and arbitrarily including Ce and/or Pr; and B represents at least one element selected from transition elements excluding Co, Rh and the rare-earth elements, and Al.

It is preferred that A represents at least one element selected from only rare-earth elements each having a valence of 3 as the only valence in the general formula (1).

The present invention also provides an exhaust gas purifying catalyst comprising a composite oxide having a perovskite structure represented by the general formula (2) :

A₁₋ₓA'ₓB_{1-z}Rh_{z}O₃ (2)

wherein A represents at least one element selected from La, Nd, and Y; A' represents Ce and/or Pr; B represents at least one element selected from Fe, Mn, and Al; x is an atomic ratio satisfying the following relation: 0 ≤ x < 0.5; and z is an atomic ratio satisfying the following relation: 0 < z ≤ 0.8.

It is preferred that B essentially includes at least Fe or Al and arbitrarily includes Mn; and x is 0 in the general formula (2).

It is preferred that Pt is further supported by the exhaust gas purifying catalyst.

### Best Mode for Carrying Out the Invention

The exhaust gas purifying catalyst of the present invention comprises a composite oxide having a perovskite structure represented by the general formula (1):

ABRhO₃ (1)

wherein A represents at least one element selected from rare-earth elements essentially including one or more rare-earth elements each having a valence of 3 as the only valence and arbitrarily including Ce and/or Pr; and B represents at least one element selected from transition elements excluding Co, Rh and the rare-earth elements, and Al.

More specifically, the composite oxide has a perovskite structure and essentially comprises, on the A site, rare-earth elements each having a valence of 3 as the only valence, and arbitrarily comprises Ce and/or Pr. In addition, the composite oxide, on the B site, comprises transition elements excluding Co, Rh and the rare-earth elements and/or Al.

The "rare-earth element having a valence of 3 as the only valence" contained on the A site is a rare-earth element always having a valence of 3. Examples thereof include Sc (scandium), Y (yttrium), La (lanthanum), Nd (neodymium), Pm (promethium), Gd (gadolinium), Dy (dysprosium), Ho (holmium), Er (erbium), and Lu (lutetium).

These elements are exemplified as rare-earth elements excluding rare-earth elements each having a variable valence of 3 or 4, such as Ce (cerium), Pr (praseodymium), and Tb (terbium) and/or rare-earth elements each having a variable valence of 2 or 3, such as Sm (samarium), Eu (europium), Tm (thulium) and Yb (ytterbium).

On the A site, Ce and/or Pr are arbitrarily contained together with the rare-earth element having a valence of 3 as the only valence. As described above, Ce and/or Pr are rare-earth elements each having a variable valence of 3 or 4 and having an ionic radius which allows them to be stably contained. The perovskite structure can be stabilized by incorporating them together with the rare-earth element having a valence of 3 as the only valence.

The composite oxide of the present invention essentially comprises the rare-earth elements having a valence of 3 as the only valence, such as Sc, Y, La, Nd, Pm, Gd, Dy, Ho, Er, and Lu, and arbitrarily comprises Ce and/or Pr on the site A.

As described above, the composite oxide of the present invention comprises the rare-earth element having a valence of 3 as the only valence and arbitrarily comprises Ce and/or Pr on the A site, and thus Rh in the perovskite structure can be stabilized under an oxidative-reducing atmosphere.

More specifically, the composite oxide of the present invention comprises on the A site the rare-earth element having a valence of 3 as the only valence alone, or comprises on the A site the rare-earth element having a valence of 3 as the only valence, and Ce and/or Pr. Preferably, the composite oxide comprises the rare-earth element having a valence of 3 as the only valence alone. When the composite oxide comprises the rare-earth element having a valence of 3 as the only valence alone, Rh in the perovskite structure can be further stabilized.

The above-mentioned rare-earth elements having a valence of 3 as the only valence may be used alone or in combination.

The transition elements excluding Co, Rh and the rare-earth elements, which are contained on the B site together with Rh, are not specifically limited and include elements having atomic numbers of 22 (Ti) through 30 (Zn), atomic numbers of 40 (Zr) through 48 (Cd), and atomic numbers of 72 (Hf) through 80 (Hg) in the Periodic Table of Elements (IUPAC, 1990), except for Rh and Co. Specific examples thereof include Cr (chromium), Mn (manganese), Fe (iron), Ni (nickel), and Cu (copper).

These transition elements can be used alone or in combination.

Therefore, transition elements excluding Co, Rh and the rare-earth elements, such as Cr, Mn, Fe, Ni, and Cu, and/or Al (aluminum) are contained on the B site.

In the composite oxide of the present invention, the rare-earth elements having a valence of 3 as the only valence, which are contained on the A site, are preferably La, Nd and Y. The use of La, Nd and Y can stabilize the perovskite structure.

The transition elements excluding Co, Rh and the rare-earth elements, and Al, which are contained on the B site together with Rh, are preferably Fe, Mn, and Al. The use of Fe, Mn, and/or Al stabilizes the perovskite structure under a reducing atmosphere. The use of Fe reduces environmental loads and improves the safety.

In the composite oxide of the present invention, when Ce and/or Pr are contained on the A site, an atomic ratio is preferably less than 0.5, and more preferably less than 0.2. If the atomic ratio is 0.5 or more, the perovskite structure becomes unstable and a uniform perovskite structure may not be maintained.

The atomic ratio of Rh contained on the B site is preferably 0.8 or less, and more preferably 0.5 or less. If the atomic ratio is more than 0.8, the cost may not be reduced.

Therefore, the exhaust gas purifying catalyst of the present invention preferably comprises a composite oxide having a perovskite structure represented by the general formula (2):

A₁₋ₓA'ₓB_{1-z}Rh_{z}O₃ (2)

wherein A represents at least one element selected from La, Nd, and Y; A' represents Ce and/or Pr; B represents at least one element selected from Fe, Mn, and Al; x is an atomic ratio satisfying the following relation: 0 ≤ x < 0.5; and z is an atomic ratio satisfying the following relation: 0 < z ≤ 0.8.

Namely, in the general formula (2), each of La, Nd, and Y represented by A is contained on the A site alone or in combination in an arbitrary atomic ratio. Each of Ce and Pr represented by A' may be contained on the A site alone or in combination in an arbitrary atomic ratio of less than 0.5. In that case, each of La, Nd, and Y represented by A is contained alone or in combination in an atomic ratio so that the amount of A is the balance of an atomic ratio of Ce and Pr. On the B site, Rh is contained in an atomic ratio of less than 0.8, and each of Fe, Mn, and Al represented by B is contained alone or in combination in an arbitrary atomic ratio so that the total amount of B is the balance of an atomic ratio of Rh.

Preferably, at least Fe or Al among Fe, Mn, and Al represented by B is essentially contained on the B site. In that case, Mn is arbitrarily contained in combination, preferably. When Fe and/or Al are essentially contained and Mn is arbitrarily contained in combination, the perovskite structure can be stabilized under a reducing atmosphere at high temperature.

In case Ce and Pr represented by A' are not contained in the general formula (2) (x = 0), as described above, the perovskite structure can be stabilized.

The composite oxide of the present invention having a perovskite structure can be prepared, but is not specifically limited to, according to any suitable procedure for the preparation of composite oxides. Examples thereof are coprecipitation process, citrate complex process, and alkoxide process.

In the coprecipitation process, an aqueous mixed salt solution containing salts of the above-mentioned elements in the stoichiometric ratio is prepared. The aqueous mixed salt solution is coprecipitated by the addition of a neutralizing agent, and the resulting coprecipitate is dried and subjected to heat treatment.

Examples of the salts of the elements are inorganic salts such as sulfates, nitrates, chlorides, and phosphates; and organic salts such as acetates and oxalates, of which nitrates and acetates are preferred. The aqueous mixed salt solution can be prepared, for example, by adding the salts of the elements to water so as to establish the stoichiometric ratio and mixing them with stirring.

Then, the aqueous mixed salt solution is coprecipitated by adding the neutralizing agent thereto. The neutralizing agent includes, but is not specifically limited to, ammonia; organic bases including amines such as triethylamine and pyridine; and inorganic bases such as sodium hydroxide, potassium hydroxide, potassium carbonate, and ammonium carbonate. The neutralizing agent is added dropwise to the aqueous mixed salt solution so that the solution after the addition of the neutralizing agent has a pH of about 6 to 10. This dropwise addition efficiently coprecipitates the salts of the elements.

The resulting coprecipitate is washed with water according to necessity, dried typically by vacuum drying or forced-air drying, and subjected to heat treatment typically at about 500 to 1000°C, preferably at about 600 to 950°C. Thus, the composite oxide is prepared.

In the citrate complex process, for example, an aqueous solution containing citrate and a salt mixture is prepared by mixing citric acid and the salts of the above-mentioned elements so as to establish the above-mentioned stoichiometric ratio. The aqueous solution containing citrate and a salt mixture is evaporated to dryness to form citrate complex of the elements. The resulting citrate complex is provisionally baked and then subjected to heat treatment.

The same as listed above can be used as the salts of the elements herein. The aqueous solution containing citrate and a salt mixture can be prepared by initially preparing the aqueous mixed salt solution by the above procedure and adding an aqueous solution of citric acid to the aqueous mixed salt solution. The amount of citric acid is preferably about 2 to 3 moles per 1 mole of the resulting composite oxide.

Then, the aqueous solution containing citrate and a salt mixture is evaporated to dryness to form a citrate complex of the above-mentioned elements. The evaporation to dryness is carried out at a temperature at which the formed citrate complex is not decomposed, for example, at room temperature to about 150°C to remove fluid immediately. The citrate complex of the elements is thus obtained.

The formed citrate complex is then provisionally baked and then subjected to heat treatment. The provisional baking may be carried out by heating at 250°C or higher in vacuum or in an inert atmosphere. The provisionally baked substance is then heated, for example, at about 500 to 1000°C, and preferably at about 600 to 950°C. Thus, the composite oxide is prepared.

In the alkoxide process, for example, an alkoxide mixed solution containing alkoxides of the elements, except for noble metals such as Rh, in the stoichiometric ratio is prepared. The alkoxide mixed solution is precipitated on hydrolysis by adding an aqueous solution containing salts of the noble metals such as Rh thereto. The resulting precipitate is dried and then subjected to heat treatment.

Examples of the alkoxides of the individual elements include alcholates each comprising the element and an alkoxy such as methoxy, ethoxy, propoxy, isopropoxy, or butoxy; and alkoxyalcholates of the individual elements represented by the following general formula (3):

E[OCH(R¹)-(CH₂)ₐ-OR²]s (3)

wherein E represents the element; R¹ represents a hydrogen atom or an alkyl group having 1 to 4 carbon atoms; R² represents an alkyl group having 1 to 4 carbon atoms; a is an integer of 1 to 3; and s is an integer of 2 or 3.

More specific examples of the alkoxyalcholates include methoxyethylate, methoxypropylate, methoxybutylate, ethoxyethylate, ethoxypropylate, propoxyethylate, and butoxyethylate.

The alkoxide mixed solution can be prepared, for example, by adding the alkoxides of the individual elements to an organic solvent in such proportions so as to establish the above-mentioned stoichiometric ratio and mixing them with stirring. The organic solvent is not specifically limited, as long as it can dissolve the alkoxides of the individual elements. Examples of such organic solvents include aromatic hydrocarbons, aliphatic hydrocarbons, alcohols, ketones, and esters. Among them, aromatic hydrocarbons such as benzene, toluene, and xylene are preferred.

Then, the alkoxide mixed solution is precipitated on hydrolysis by adding an aqueous solution containing salts of the noble metals such as Rh thereto in the above-mentioned stoichiometric ratio. Examples of the aqueous solution containing salts of the noble metals such as Rh include aqueous nitrate solution, aqueous chloride solution, aqueous hexaammine chloride solution, aqueous dinitrodiammine nitrate solution, hexachloro acid hydrate, and potassium cyanide salt.

The resulting precipitate is dried typically by vacuum drying or forced-air drying and is subjected to heat treatment, for example, at about 500 to 1000°C, and preferably at about 500 to 850°C. Thus, the composite oxide is prepared.

In the alkoxide method, the composite oxide may be alternatively prepared in the following manner. A solution containing organometallic salts of the noble metals such as Rh is added to the alkoxide mixed solution to obtain a homogenous mixed solution. The homogenous mixed solution is precipitated on hydrolysis by adding water thereto. The resulting precipitate is dried and then subjected to heat treatment.

Examples of the organometallic salts of the noble metals such as Rh are metal chelate complexes of the noble metals such as Rh, including carboxylic acid salts of the noble metals such as Rh formed typically from acetate or propionate; and diketone complexes of the noble metals such as Rh formed from diketone compounds represented by the following general formula (4):

R³COCH₂COR⁴ (4)

wherein R³ represents an alkyl group having 1 to 4 carbon atoms, a fluoroalkyl group having 1 to 4 carbon atoms or an aryl group; and R⁴ represents an alkyl group having 1 to 4 carbon atoms, a fluoroalkyl group having 1 to 4 carbon atoms, an aryl group, or an alkyloxy group having 1 to 4 carbon atoms.

In above-mentioned general formula (4), examples of the alkyl group having 1 to 4 carbon atoms of R³ and R⁴ include, for example, methyl, ethyl, propyl, isopropyl, butyl, s-butyl, and t-butyl. The fluoroalkyl groups each having 1 to 4 carbon atoms of R³ and R⁴ include, for example, trifluoromethyl. The aryl groups of R³ and R⁴ include, for example, phenyl. The alkyloxy group having 1 to 4 carbon atoms of R⁴ includes, for example, methoxy, ethoxy, propoxy, isopropoxy, butoxy, s-butoxy, and t-butoxy.

Specific examples of the diketone compounds include 2,4-pentanedione, 2,4-hexanedione, 2,2-dimethyl-3,5-hexanedione, 1-phenyl-1,3-butanedione, 1-trifluoromethyl-1,3-butanedione, hexafluoroacetylacetone, 1,3-diphenyl-1,3-propanedione, dipivaloylmethane, methyl acetoacetate, ethyl acetoacetate, and t-butyl acetoacetate.

The solution containing the organometallic salts of the noble metals such as Rh can be prepared, for example, by adding an organometallic salt of the noble metals such as Rh to an organic solvent in such proportions as to establish the above-mentioned stoichiometric ratio, and mixing them with stirring. The organic solvent herein can be any of the above-mentioned organic solvents.

The above-prepared solution containing organometallic salts of the noble metals such as Rh is added to the alkoxide mixed solution to obtain a homogenous mixed solution, and the homogenous mixed solution is precipitated on hydrolysis by adding water thereto.

The resulting precipitate is dried typically by vacuum drying or forced-air drying and is subjected to heat treatment, for example, at about 500 to 1000°C, and preferably at about 500 to 850°C. The composite oxide is thus prepared.

Pt may be further supported by the thus-prepared composite oxide according to the present invention. Precipitation of Rh from the perovskite structure under a reducing atmosphere can be accelerated by supporting Pt, and thus response can be improved.

A method of supporting Pt by the composite oxide is not specifically limited and a known method can be used. For example, each solution of a salt containing Pt is prepared and the composite oxide is impregnated with the solution and then baked.

In this case, the above-mentioned salt solution may be used and, for example, aqueous nitrate solution, dinitrodiammine nitrate solution, and aqueous chloride solution are used. More specifically, as a solution containing a salt of platinum, for example, dinitrodiammine platinum nitrate solution, chloroplatinic acid solution and tetravalent platinum ammine solution are preferably used. The composite oxide was impregnated with Pt, dried at about 50 to 200°C for about one to forty-eight hours and then baked at about 350 to 1000°C for about one to twelve hours.

The thus-prepared composite oxide according to the present invention can be used as intact as an exhaust gas purifying catalyst but is generally subjected to a conventional procedure to form an exhaust gas purifying catalyst. For example, the composite oxide is supported by a catalyst carrier.

The catalyst carrier is not specifically limited and includes, for example, known catalyst carriers such as honeycomb monolith carriers made of cordierite.

The composite oxide may be supported by the catalyst carrier, for example, by adding water to the composite oxide to form a slurry, applying the slurry to the catalyst carrier, drying and subjecting the applied slurry to heat treatment at about 300 to 800°C, and preferably at about 300 to 600°C.

The resulting exhaust gas purifying catalyst of the present invention containing the composite oxide can stabilize Rh in the perovskite structure and allows Rh to be finely and highly dispersed in the composite oxide and maintains its high catalytic activity even in long-term use. This is because of self-regenerative function, in which solution in an oxidative atmosphere and deposition (precipitation) in a reducing atmosphere are repeated. The self-regenerative function of Rh with respect to the perovskite structure due to solution and deposition in oxidative-reducing atmospheres can achieve high catalytic activity even in a small amount of Rh.

As a result, the exhaust gas purifying catalyst of the present invention containing the composite oxide can maintain the catalytic activity of Rh at a high level over a long time and can achieve satisfactory emission control performance. The catalyst can be suitably used as an exhaust gas purifying catalyst for automobiles.

### EXAMPLES

The present invention will be illustrated in further detail with reference to several examples and comparative examples below, which are never intended to limit the scope of the invention.

### Example 1

Initially, an alkoxide mixed solution was prepared by charging 40.6 g (0.100 mol) of lanthanum methoxypropylate [La(OCHMeCH₂OMe)₃] and 30.7 g (0.095 mol) of iron methoxypropylate [Fe(OCHMeCH₂OMe)₃] in a 500-mL round-bottomed flask and dissolving them in 200 mL of toluene added thereto with stirring. Separately, 2.00 g (0.005 mol) of rhodium acetylacetonate [Rh(CH₃COCHCOCH₃)₃] was dissolved in 200 mL of toluene, and the resulting solution was added to the alkoxide mixed solution in the round-bottomed flask to obtain a homogenous mixed solution containing LaFeRh.

Next, 200 mL of deionized water was added dropwise to the round-bottomed flask over about fifteen minutes to form a viscous brown precipitate on hydrolysis.

After stirring at room temperature for two hours, toluene and water were distilled off under reduced pressure to obtain a precursor of the LaFeRh composite oxide. The precursor was placed on a petri dish, subjected to forced-air drying at 60°C for twenty-four hours, subjected to heat treatment at 650°C in the atmosphere for one hour using an electric furnace to obtain a blackish brown powder.

The X-ray powder diffraction analysis of the powder revealed that it was identified as a single crystal phase comprising a composite oxide having a perovskite structure of La_{1.00}Fe_{0.95}Rh_{0.05}O₃. The powder was found to have a specific surface area of 26 m²/g and a Rh content in the composite oxide of 2.10% by mass.

### Example 2

Initially, an alkoxide mixed solution was prepared by charging 28.4g (0.0070 mol) of lanthanum methoxypropylate [La(OCHMeCH₂OMe)₃], 12.2 g (0.030 mol) of praseodymium methoxypropylate [Pr(OCHMeCH₂OMe)₃], and 30.7 g (0.095 mol) of iron methoxypropylate [Fe(OCHMeCH₂OMe)₃] in a 500-mL round-bottomed flask and dissolving them in 200 mL of toluene added thereto with stirring. Separately, 2.00 g (0.005 mol) of rhodium acetylacetonate [Rh(CH₃COCHCOCH₃)₃] was dissolved in 200 mL of toluene. The resulting solution was added to the alkoxide mixed solution in the round-bottomed flask to obtain a homogenous mixed solution containing LaPrFeRh.

Subsequently, a blackish brown powder was prepared by the procedure of Example 1.

The X-ray powder diffraction analysis of the powder revealed that it was identified as a single crystal phase comprising a composite oxide having a perovskite structure of La_{0.70}Pr_{0.30}Fe_{0.95}Rh_{0.05}O₃. The powder was found to have a specific surface area of 30 m²/g, and, in the composite oxide, a Rh content of 2.09% by mass.

### Comparative Example 1

A total of 150 g of a commercially available γ-Al₂O₃ having a specific surface area of 180 m²/g was impregnated with Rh using 71.9 g (corresponding to 3.22 g of Rh) of an aqueous rhodium nitrate solution having a Rh content of 4.478% by mass, subjected to forced-air drying at 60°C for twenty-four hours and then subjected to heat treatment at 500°C in the atmosphere for one hour using an electric furnace. The amount of Rh supported by γ-Al₂O₃ was 2.10% by mass.

### Test Example 1

### 1) Coating to catalyst carrier

A total of 100 mL of ion-exchanged water was mixed with 100 g of the powders prepared according to Example 1, Example 2, and Comparative Example 1, followed by addition of 17.5 g of zirconia sol (NZS-30B, a product of Nissan Chemical Industries, Ltd.; a solid content of 30% by mass) to obtain a slurry. The slurry was applied by coating to a catalyst carrier comprising a cordierite honeycomb having a diameter of 80 mm, a length of 95 mm, and a grating density of 400 cells/(0.025 m)².

After coating, excess slurry was removed by air blow so as to set the coating amount of the powder at 157.5 g per 1 L of the catalyst carrier (75.2 g per one catalyst carrier). After forced-air drying at 120°C for twelve hours, the work was baked at 600°C in the atmosphere for three hours to obtain monolith catalysts containing the powders according to Example 1, Example 2, and Comparative Example 1, respectively. The Rh content of the monolith catalyst was 3.14 g per 1 L of the catalyst carrier (1.50 g per one catalyst carrier) in Example 1, 3.13 g per 1 L of the catalyst carrier (1.50 g per one catalyst carrier) in Example 2, and 3.14 g per 1 L of the catalyst carrier (1.50 g per one catalyst carrier) in Comparative Example 1.

### 2) Endurance test

The above-prepared monolith catalysts were connected to both banks of a V type eight cylinder engine having a displacement of 4 liters and were subjected to an endurance test at a temperature in the catalyst bed of 930°C with a single cycle of 900 seconds repeated for a total of 200 hours.

One cycle of the endurance test was set as follows. Specifically, from Second 0 to Second 870 (a period of 870 seconds), an oscillation (amplitude) of Δλ = ±4% (ΔA/F = ±0.6 A/F) with the theoretical fuel-air ratio (λ = 1) of A/F=14.6 (A/F=air to fuel ratio) at the center was applied to the monolith catalysts at a frequency of 0.6 Hz. From Second 870 to Second 900 (a period of 30 seconds), secondary air was introduced upstream of the catalysts to achieve forced oxidation under the conditions (λ = 1.25).

### 3) Activity measurement

Using an in-line four-cylinder engine having a displacement of 1.5 liters, an oscillation (amplitude) of Δλ = ±3.4% (ΔA/F = ±0.5 A/F) of which the center was set in the theoretical fuel-air ratio (λ = 1) was applied to the monolith catalysts at a frequency of 1 Hz. The purification rates of CO, HC, and NOx of the monolith catalysts before and after this endurance test were measured. The results are shown in Table 1. In the measurement, the temperature of the upstream (inlet gas) of the monolith catalysts was kept at 460°C, and the flow rate was set at a space velocity (SV) of 160000 per hour. Table 1 also shows the Rh content (g) per 1 liter of each of the monolith catalysts.

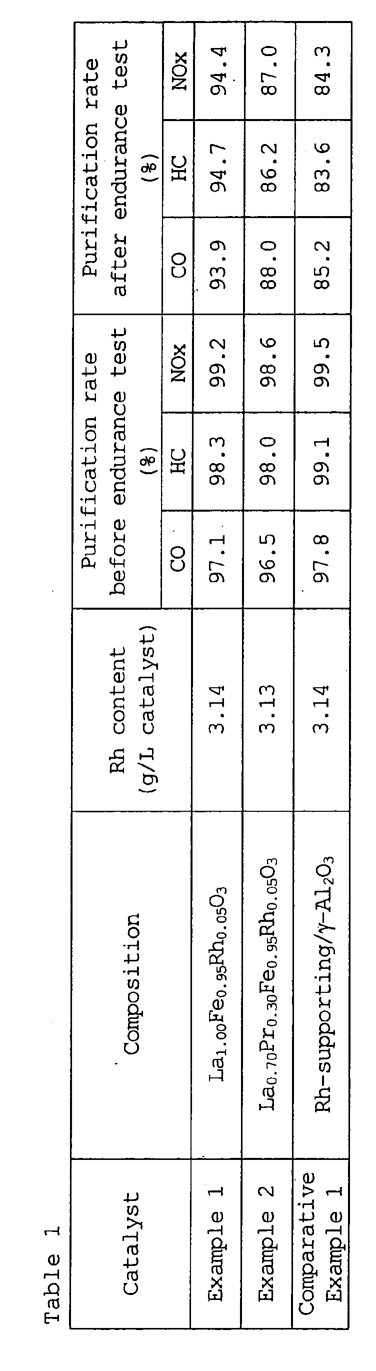

Table 1 shows that the monolith catalyst comprising the powder according to Comparative Example 1 exhibit decreased purification rates after the endurance test, and that, in contrast, the monolith catalysts comprising the powders according to Examples 1 and 2 maintain their high activities even after the endurance test.

### 4) Analysis of fine structure

Fine structures of the powders according to Example 1 and Comparative Example 1 were analyzed by TEM (Transmission Electron Microscope) and XAFS (X-ray Absorption Fine Structure).

### Analysis by TEM

The powders according to Example 1 and Comparative Example 1 were scraped off from the monolith catalysts and then observed by TEM. The analysis by TEM revealed that Rh is dispersed in the form of nanometer-sized fine particles in the powder of Example 1, while Rh is dispersed in the form of particles of several tens of nanometers in the powder of Comparative Example 1.

### Analysis by XAFS

Each powder was subjected to an oxidation treatment at 800°C in the atmosphere for one hour and to a reducing treatment at 800°C in a N₂ gas containing 10% H₂ for one hour, and then to a reoxidation treatment at 800°C in the atmosphere for one hour. After the respective treatments, XAFS of the powders according to Example 1 and Comparative Example 1 were measured. The measurement was performed as follows. After subjected to the above-mentioned treatments, each powder was diluted with BN and press-formed into a disc-shaped sample and the resulting sample was measured near Rh-K absorption edges by a permeability method.

The results of XANES (X-Ray Absorption Near Edge Structure) revealed that a valence of Rh is +3 after the oxidation treatment, 0 (metal state) after the reducing treatment, and +3 after the reoxidation treatment in both powders according to Example 1 and Comparative Example 1.

The results of parameter fitting after Fourier transformation by means of EAXFS (Extended X-ray Absorption Fine Structure) revealed that Rh is contained on the B site of a perovskite structure after the oxidation treatment and is deposited outside the B site of the perovskite structure to form metal particles after the reducing treatment, but is contained again on the B site of the perovskite structure after the reoxidation treatment in Example 1. The results revealed that Rh is converted into Rh₂O₃ after the oxidation treatment and is converted into metal particles after the reducing treatment, and then converted into Rh₂O₃ again after the reoxidation treatment in Comparative Example 1.

The above results revealed that Rh in the powder according to Example 1 (composite oxide comprising LaFe_{0.95}Rh_{0.05}O₃) is highly dispersed therein by repeating solution and deposition (precipitation) in the perovskite structure under an oxidative-reducing variable atmosphere where an exhaust gas purifying catalyst for automobiles is used, and thus high catalytic activity can be maintained.

### Example 3

Initially, an alkoxide mixed solution was prepared by charging 32.5 g (0.080 mol) of lanthanum methoxypropylate [La(OCHMeCH₂OMe)₃], 6.2 g (0.015 mol) of neodymium methoxypropylate [Nd(OCHMeCH₂OMe)₃], 2.0 g (0.005 mol) of cerium methoxypropylate [Ce(OCHMeCH₂OMe)₃], 19.4 g (0.060 mol) of iron methoxypropylate [Fe(OCHMeCH₂OMe)₃], and 11.3 g (0.035 mol) of manganese methoxypropylate [Mn(OCHMeCH₂OMe)₂] in a 500-mL round-bottomed flask and dissolving them in 200 mL of toluene added thereto with stirring.

Next, an aqueous solution prepared by diluting 11.5 g (corresponding to 0.51 g (0.005 mol) of Rh) of an aqueous rhodium nitrate solution having a Rh content of 4.478% by mass with 150 mL of ion-exchanged water was added dropwise to the round-bottomed flask over about fifteen minutes to form a viscous blackish brown precipitate on hydrolysis.

Subsequently, a blackish brown powder was obtained by the procedure of Example 1, except for carrying out the heat treatment at 850°C for two hours.

The X-ray powder diffraction analysis of the powder revealed that it was identified as a single crystal phase comprising a composite oxide having a perovskite structure of La_{0.80}Nd_{0.15}Ce_{0.05}Fe_{0.60}Mn_{0.35}Rh_{0.05}O₃. The powder was found to have a specific surface area of 7.8 m²/g, and, in the composite oxide, a Rh content of 2.09% by mass.

### Example 4

Initially, an alkoxide mixed solution was prepared by charging 32.2 g (0.090 mol) of lanthanum n-butoxide [La(Oⁿ⁻C₄H₉)₃], 3.1 g (0.010 mol) of yttrium n-butoxide [Y(Oⁿ-C₄H₉)₃], 19.3 g (0.070 mol) of iron n-butoxide [Fe (Oⁿ⁻C₄H₉)₃] and 4.9 g (0.020 mol) of aluminum n-butoxide [Al(Oⁿ⁻C₄H₉)₃] in a 500-mL round-bottomed flask and dissolving them in 200 mL of toluene added thereto with stirring. Separately, 4.00 g (0.010 mol) of rhodium acetylacetonate [Rh(CH₃COCHCOCH₃)₃] was dissolved in 200 mL of toluene. The resulting solution was added to the alkoxide mixed solution in the round-bottomed flask to obtain a homogenous mixed solution containing LaYFeAlRh.

Subsequently, a blackish brown powder was obtained by the procedure of Example 1, except for carrying out the heat treatment at 800°C for two hours.

The X-ray powder diffraction analysis of the powder revealed that it was identified as a single crystal phase comprising a composite oxide having a perovskite structure of La_{0.90}Y_{0.10}Fe_{0.70}Al_{0.20}Rh_{0.10}O₃. The powder was found to have a specific surface area of 21 m²/g, and, in the composite oxide, a Rh content of 4.35% by mass.

### Example 5

Initially, an alkoxide mixed solution was prepared by charging 31.6 g (0.100 mol) of lanthanum i-propoxide [La(Oⁱ⁻C₃H₇)₃] and 19.4 g (0.095 mol) of aluminum i-propoxide [Al(Oⁱ⁻C₃H₇)₃] in a 500-mL round-bottomed flask and dissolving them in 200 mL of benzene added thereto with stirring. Separately, 2.00 g (0.005 mol) of rhodium acetylacetonate [Rh(CH₃COCHCOCH₃)₃] was dissolved in 200 mL of benzene. The resulting solution was added to the alkoxide mixed solution in the round-bottomed flask to obtain a homogenous mixed solution containing LaAlRh.

Subsequently, a blackish brown powder was obtained by the procedure of Example 1, except for carrying out the heat treatment at 800°C for two hours.

The X-ray powder diffraction analysis of the powder revealed that it was identified as a single crystal phase comprising a composite oxide having a perovskite structure of La_{1.00}Al_{0.95}Rh_{0.05}O₃. The powder was found to have a specific surface area of 24 m²/g, and, in the composite oxide, a Rh content of 2.36% by mass.

Next, the powder was impregnated with 25.9 g (corresponding to 0.22 g of Pt) of a dinitrodiammine platinum nitrate solution having a Pt content of 8.50% by mass, subjected to forced-air drying at 60°C for twenty-four hours, subjected to heat treatment at 500°C in the atmosphere for one hour using an electric furnace to obtain a Pt-supporting/La_{1.00}Al_{0.95}Rh_{0.05}O₃ powder.

### Example 6

Initially, an alkoxide mixed solution was prepared by charging 32.5 g (0.080 mol) of lanthanum methoxypropylate [La(OCHMeCH₂OMe)₃], 8.2 g (0.020 mol) of cerium methoxypropylate [Ce(OCHMeCH₂OMe)₃], and 21.0 g (0.065 mol) of iron methoxypropylate [Fe(OCHMeCH₂OMe)₃] in a 500-mL round-bottomed flask and dissolving them in 200 mL of toluene added thereto with stirring. Separately, 14.0 g (0.035 mol) of rhodium acetylacetonate [Rh(CH₃COCHCOCH₃)₃] was dissolved in 200 mL of toluene, and the resulting solution was added to the alkoxide mixed solution in the round-bottomed flask to obtain a homogenous mixed solution containing LaCeFeRh.

Subsequently, a blackish brown powder was obtained by the procedure of Example 1, except for carrying out the heat treatment at 700°C for three hours.

The X-ray powder diffraction analysis of the powder revealed that it was identified as a single crystal phase comprising a composite oxide having a perovskite structure of La_{0.80}Ce_{0.20}Fe_{0.65}Rh_{0.35}O₃. The powder was found to have a specific surface area of 22 m²/g and a Rh content in the composite oxide of 13.9% by mass.

### Example 7

Initially, an aqueous solution of citric acid and salts containing LaFeRh was prepared by mixing an aqueous solution prepared by dissolving 43.3 g (0.100 mol) of lanthanum nitrate (La(NO₃)₃·6H₂O) in 100 mL of ion-exchanged water, an aqueous solution prepared by dissolving 36.4 g (0.090 mol) of iron nitrate (Fe(NO₃)₃·9H₂O) in 30 mL of ion-exchanged water, an aqueous solution prepared by dissolving 23 g (corresponding to 1.03 g (0.010 mol) of Rh) of an aqueous rhodium nitrate solution having a Rh content of 4.478% by mass in 10 mL of ion-exchanged water, and an aqueous solution prepared by dissolving 38.4 g (0.200 mol) of citric acid in 240 mL of ion-exchanged water.

The aqueous solution of citric acid and salts was evaporated to dryness in an oil bath at 80°C with evacuation using a rotary evaporator over seven hours to obtain a citrate complex.

The resulting citrate complex was heated to 400°C over three hours and then cooled. The citrate complex was baked at 700°C for three hours to obtain a powder.

The X-ray powder diffraction analysis of the powder revealed that it was identified as a single crystal phase comprising a composite oxide having a perovskite structure of La_{1.00}Fe_{0.90}Rh_{0.10}O₃. The powder was found to have a specific surface area of 24.1 m²/g and a Rh content in the composite oxide of 4.16% by mass.

### Example 8

Initially, an aqueous mixed salt solution containing LaFeMnRh was prepared by dissolving and homogeneously mixing 43.3 g (0.100 mol) of lanthanum nitrate (La(NO₃)₃·6H₂O), 24.2 g (0.060 mol) of iron nitrate (Fe(NO₃)₃·9H₂O), 8.6 g (0.030 mol) of manganese nitrate (Mn(NO₃)₂·6H₂O) and 23 g (corresponding to 1.03 g (0.010 mol) of Rh) of an aqueous rhodium nitrate solution having a Rh content of 4.478% by mass in 400 mL of ion-exchanged water.

The above-prepared solution was coprecipitated by adding an aqueous solution of ammonium carbonate as a neutralizing agent dropwise thereto to a pH of 10. Then the coprecipitate was fully matured for one hour, filtrated and washed with water.

The resulting coprecipitate was dried at 120°C for twelve hours and was baked at 700°C in the atmosphere for three hours to obtain a powder.

The X-ray powder diffraction analysis of the powder revealed that it was identified as a single crystal phase comprising a composite oxide having a perovskite structure of La_{1.00}Fe_{0.60}Mn_{0.30}Rh_{0.10}O₃. The powder was found to have a specific surface area of 22.0 m²/g and a Rh content in the composite oxide of 4.16% by mass.

### Comparative Example 2

A total of 150 g of a commercially available γ-Al₂O₃ having a specific surface area of 180 m²/g was impregnated with Rh using 176 g (corresponding to 7.88 g of Rh) of an aqueous rhodium nitrate solution having a Rh content of 4.478% by mass, subjected to forced-air drying at 60°C for twenty-four hours and then subjected to heat treatment at 500°C in the atmosphere for one hour using an electric furnace. The amount of Rh supported by γ-Al₂O₃ was 5.0 by mass.

### Comparative Example 3

Initially, an aqueous solution of citric acid and salts containing LaSmFeCoRh was prepared by mixing an aqueous solution prepared by dissolving 34.6 g (0.080 mol) of lanthanum nitrate (La(NO₃)₃·6H₂O) in 100 mL of ion-exchanged water, an aqueous solution prepared by dissolving 8.9 g (0.020 mol) of samarium nitrate (Sm(NO₃)₃·6H₂O) in 30 mL of ion-exchanged water, an aqueous solution prepared by dissolving 24.2 g (0.060 mol) of iron nitrate (Fe(NO₃)₃·9H₂O) in 30 mL of ion-exchanged water, an aqueous solution prepared by dissolving 7.7 g (0.030 mol) of cobalt nitrate (Co(NO₃)₂·4H₂O) in 30 mL of ion-exchanged water, an aqueous solution prepared by dissolving 23 g (corresponding to 1.03 g (0.010 mol) of Rh) of an aqueous rhodium nitrate solution having a Rh content of 4.478% by mass in 10 mL of ion-exchanged water, and an aqueous solution prepared by dissolving 38.4 g (0.200 mol) of citric acid in 240 mL of ion-exchanged water.

Subsequently, a powder was obtained by the procedure of Example 7.

The X-ray powder diffraction analysis of the powder revealed that it was identified as a single crystal phase comprising a composite oxide having a perovskite structure of La_{0.80}Sm_{0.20}Fe_{0.60}Co_{0.30}Rh_{0.10}O₃. The powder was found to have a specific surface area of 23.5 m²/g and a Rh content in the composite oxide of 4.11% by mass.

### Comparative Example 4

An aqueous mixed salt solution containing LaFeCoRh was prepared by dissolving and homogenously mixing 43.3 g (0.100 mol) of lanthanum nitrate (La(NO₃)₃·6H₂O), 24.2 g (0.060 mol) of iron nitrate (Fe(NO₃)₃·9H₂O), 7.7 g (0.030 mol) of cobalt nitrate (Co(NO₃)₂·4H₂O), and 23 g (corresponding to 1.03 g (0.010 mol) of Rh) of an aqueous rhodium nitrate solution having a Rh content of 4.478% by mass in 400 mL of ion-exchanged water.

Subsequently, a powder was obtained by the procedure of Example 8.

The X-ray powder diffraction analysis of the powder revealed that it was identified as a single crystal phase comprising a composite oxide having a perovskite structure of La_{1.00}Fe_{0.60}Co_{0.30}Rh_{0.10}O₃. The powder was found to have a specific surface area of 21.8 m²/g and a Rh content in the composite oxide of 4.14% by mass.

### Test Example 2

### 1) Coating to catalyst carrier

A total of 120 mL of deionized water was mixed with 20 g of the powders prepared according to Examples 3 to 8 and Comparative Examples 2 to 4 and 100 g of a powdery composite oxide having a composition of Ce_{0.6}Zr_{0.3}Y_{0.1}O_{0.95}, followed by addition of 21.1 g of zirconia sol (NZS-30B, a product of Nissan Chemical Industries, Ltd.; a solid content of 30% by mass) to obtain a slurry. The slurry was applied by coating to a catalyst carrier comprising a cordierite honeycomb having a diameter of 80 mm, a length of 95 mm, and a grating density of 400 cells/(0.025 m)².

After coating, excess slurry was removed by air blow so as to set the coating amount of the powder at 126 g per 1 L of the catalyst carrier (60 g per one catalyst carrier). After forced-air drying at 120°C for twelve hours, the work was baked at 600°C in the atmosphere for three hours to obtain monolith catalysts containing the powders according to Examples 3 to 8 and Comparative Examples 2 to 4, respectively.

### 2) Endurance test

The above-prepared monolith catalysts were connected to both banks of a V type eight cylinder engine having a displacement of 4 liters and were subjected to an endurance test at a highest temperature in the catalyst bed of 1050°C with a single cycle of 30 seconds repeated for a total of 60 hours.

One cycle of the endurance test was set as follows. Specifically, from Second 0 to Second 5 (a period of 5 seconds), the operation was carried out at a theoretical fuel-air ratio (λ = 1). From Second 5 to Second 28 (a period of 23 seconds), an excessive amount of fuel was fed to the bed (λ = 0.89). From Second 7 to Second 30 (a period of 23 seconds) lagging two seconds from the above, high-pressure secondary air was introduced upstream of the catalysts. From Second 7 to Second 28 (a period of 21 seconds), a slightly excessive amount of air was fed (λ = 1.02) to cause the excessive fuel to burn in the interior of the bed, so as to raise the temperature of the catalyst bed to 1050°C. From Second 28 to Second 30 (a period of 2 seconds), the interior of the bed was returned to the theoretical fuel-air ratio (λ = 1) and the secondary air was kept to be fed to achieve a high-temperature oxidative atmosphere in which the air is in large excess (λ = 1.25).

### 3) Activity measurement

Using an in-line four-cylinder engine having a displacement of 1.5 liters, an oscillation (amplitude) of Δλ = ±3.4% (ΔA/F = ±0.5 A/F) of which the center was set in the theoretical fuel-air ratio (λ = 1) was applied to the monolith catalysts at a frequency of 1 Hz. The purification rates of CO, HC, and NOx of the monolith catalysts before and after this endurance test were measured. The results are shown in Table 2. In the measurement, the temperature of the upstream (inlet gas) of the monolith catalysts was kept at 460°C, and the flow rate was set at a space velocity (SV) of 70000 per hour. Table 2 also shows the Rh content (g) per 1 liter of each of the monolith catalysts.

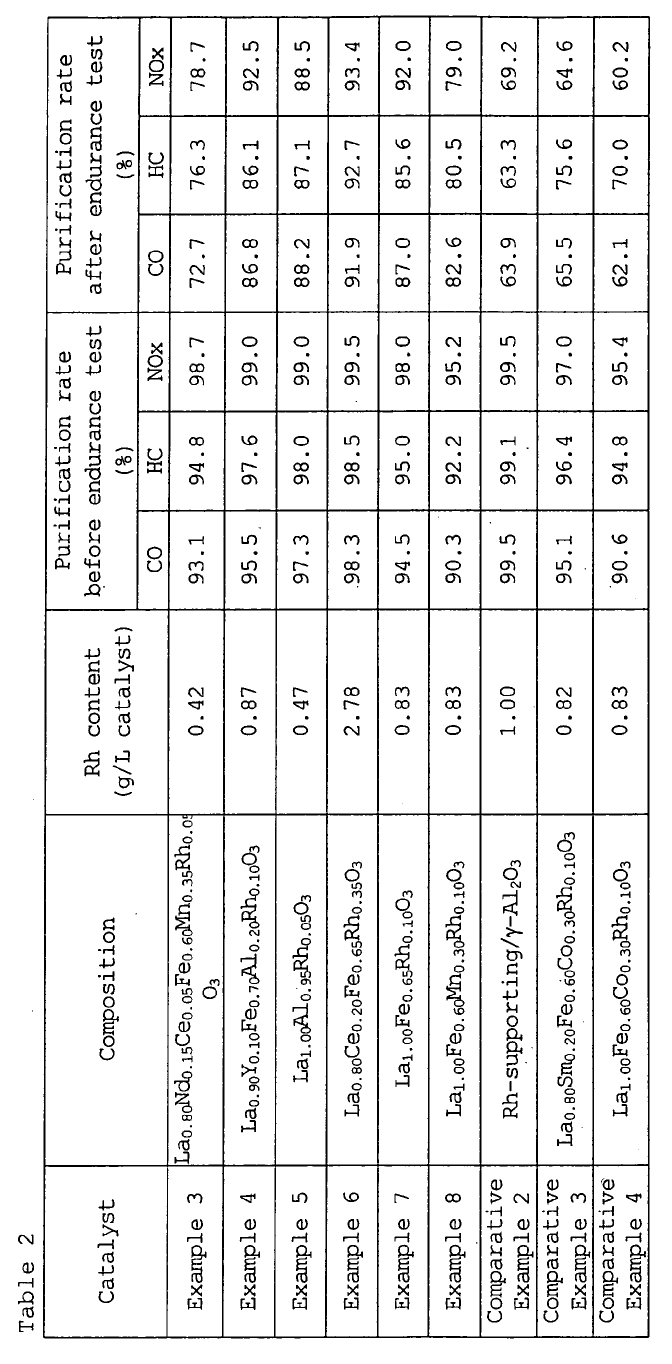

Table 2 shows that the monolith catalysts comprising the powders according to Comparative Examples 2 to 4 exhibit markedly decreased purification rates after the endurance test, and that, in contrast, the monolith catalysts comprising the powders according to Examples 3 to 8 maintain their high activities even after the endurance test.

While the illustrative embodiments and examples of the present invention are provided in the above description, such is for illustrative purpose only and it is not to be construed restrictively. Modification and variation of the present invention which will be obvious to those skilled in the art is to be covered in the following claims.

### Industrial Applicability

The exhaust gas purifying catalyst of the present invention can maintain the catalytic activity of Rh at a high level over a long time, can achieve satisfactory emission control performance and are advantageously usable as an exhaust gas purifying catalyst for automobiles.

## Claims

1. An exhaust gas purifying catalyst comprising a composite oxide having a perovskite structure represented by the general formula (1):
ABRhO₃ (1)
wherein A represents at least one element selected from rare-earth elements essentially including one or more rare-earth elements each having a valence of 3 as the only valence and arbitrarily including Ce and/or Pr; and B represents at least one element selected from transition elements excluding Co, Rh and the rare-earth elements, and Al.

2. The exhaust gas purifying catalyst according to claim 1, wherein, in the general formula (1), A represents at least one element selected from only rare-earth elements each having a valence of 3 as the only valence.

3. An exhaust gas purifying catalyst comprising a composite oxide having a perovskite structure represented by the general formula (2):
A₁₋ₓA'ₓB_{1-z}Rh_{z}O₃ (2)
wherein A represents at least one element selected from La, Nd, and Y; A' represents Ce and/or Pr; B represents at least one element selected from Fe, Mn, and Al; x is an atomic ratio satisfying the following relation: 0 ≤ x < 0.5; and z is an atomic ratio satisfying the following relation: 0 < z ≤ 0.8.

4. The exhaust gas purifying catalyst according to claim 3, wherein, in the general formula (2), B essentially includes at least Fe or Al and arbitrarily includes Mn; and x is 0.

5. The exhaust gas purifying catalyst according to claim 1, wherein Pt is further supported.
